# EUROPÄISCHE PATENTANMELDUNG

(11) **EP 3 388 179 A1**
(43) Veröffentlichungstag der Anmeldung: **17.10.2018**
(21) Anmeldenummer: 18162812.4
(22) Anmeldetag: 20.03.2018
(51) Int. Cl.: B23F 5/16, B23F 21/00, B23F 13/00, B23F 1/06

(54) **VERFAHREN ZUR VERZAHNBEARBEITUNG EINES WERKSTÜCKS**

(30) Priorität: 13.04.2017 DE 102017003648
(71) Anmelder: Liebherr-Verzahntechnik GmbH, 87437 Kempten (DE)
(72) Erfinder: Weixler, Johannes, 87471 Durach (DE); Breith, Thomas, 87439 Kempten (DE)
(74) Vertreter: Behr, Wolfgang

(57) **Zusammenfassung**

Die vorliegende Erfindung betrifft ein Verfahren zur Verzahnbearbeitung eines Werkstücks, bei welchem eine Fräsbearbeitung des Werkstücks erfolgt, um eine Verzahnungsgeometrie des Werkstücks zu erzeugen, wobei das Werkstück zusätzlich zu der Fräsbearbeitung durch Wälzschälen verzahnbearbeitet wird.

## Beschreibung

Die vorliegende Erfindung betrifft ein Verfahren zur Verzahnbearbeitung eines Werkstücks, wobei eine Verzahnung des Werkstücks durch eine Fräsbearbeitung erzeugt wird.

Bei der Fräsbearbeitung handelt es sich um ein Verzahnverfahren mit einer definierten Schneide. Das Fräswerkzeug weist üblicherweise eine Mehrzahl von Schneidezähnen auf, welche in Umfangsrichtung an dem Fräswerkzeug angeordnet sind. Durch Rotation des Fräswerkzeugs wird eine Schnittbewegung erreicht, durch welche ein spanender Materialabtrag am Werkstück erfolgt.

Die Fräsbearbeitung erlaubt daher einen hohen Materialabtrag und wird üblicherweise zur Herstellung einer Verzahnung an einem verzahnten oder unverzahnten Rohling des Werkstücks eingesetzt. Aufgrund der Schneidengeometrie und der Vorschubbewegung des Werkzeuges zur Erzeugung der Verzahnung ergibt sich, insbesondere bei der Schruppbearbeitung eine mit relativ hohen Toleranzen behaftete Oberflächengeometrie des gefrästen Werkstücks. Weiterhin erfordert eine Fräsbearbeitung eine gut zugängliche Verzahnung, da für den Anschnitt- und Überlaufweg des Werkzeuges bestimmte Freiräume zur Verfügung stehen müssen

Aufgrund der hohen Toleranzen der Oberflächengeometrie wird Fräsen üblicherweise als Weichbearbeitung zur Herstellung einer Verzahnung eingesetzt und nach dem Härten mit einer Hart-Fein-Bearbeitung wie beispielsweise dem Schleifen oder Honen kombiniert, durch welche die gewünschte Oberflächenqualität sichergestellt wird. Sind bei der gewünschten Verzahnung nur geringe Überlaufwege verfügbar, wird statt eines Fräsverfahrens üblicherweise ein Stoßverfahren eingesetzt, welches andere Anforderungen an Überlaufwege stellt als das Fräsverfahren.

Neben der Fräsbearbeitung sind weitere Verfahren zur Verzahnbearbeitung bekannt. Eines dieser Verfahren ist das Wälzschälen. Hierbei wälzt ein Werkzeug mit definierter Schneide mit einer schabenden Bewegung auf dem Werkstück ab, und wird in Breitenrichtung entlang des Werkstücks geführt. Wälzschälen ist als Verfahren seit langem bekannt, hat aufgrund des hohen Werkzeugverschleißes jedoch allenfalls eine untergeordnete Bedeutung. Wälzschälverfahren in Kombination mit Verfahren zur Nachbearbeitung der Verzahnung sind aus der DE 103 05 752 A1, DE 10 2015 120 556 A1 und DE 10 2015 104 242 A1 bekannt. Das Wälzschälen kommt ähnlich wie das Wälzstoßen mit deutlich geringeren Anschnitt- und Überlaufwegen aus, als für das Fräsern erforderlich sind.

Aufgabe der vorliegenden Erfindung ist es, ein verbessertes Verfahren zur Verzahnbearbeitung unter Einsatz eines Fräsverfahrens zur Verfügung zu stellen.

Diese Aufgabe wird durch ein Verfahren gemäß Anspruch 1 gelöst. Bevorzugte Ausgestaltungen der vorliegenden Erfindung sind Gegenstand der Unteransprüche.

Die vorliegend Erfindung umfasst ein Verfahren zur Verzahnbearbeitung eines Werkstücks, bei welchem eine Fräsbearbeitung des Werkstücks erfolgt, um eine Verzahnungsgeometrie des Werkstücks zu erzeugen. Das erfindungsgemäße Verfahren ist dadurch gekennzeichnet, dass das Werkstück zusätzlich zu der Fräsbearbeitung durch Wälzschälen verzahnbearbeitet wird. Durch das Verfahren lassen sich daher verzahnte Werkstücke herstellen. Dabei kommen mit der Fräsbearbeitung und dem Wälzschälen mindestens zwei Bearbeitungsschritte zur Herstellung der gewünschten Verzahnungsgeometrie des Werkstücks zum Einsatz.

Die kombinierte Anwendung einer Fräsbearbeitung und einer Wälzschälbearbeitung erlaubt es, die jeweiligen Vorteile dieser Verfahren miteinander zu kombinieren und/oder die Werkstückgeometrien, welche zumindest teilweise durch eine Fräsbearbeitung herstellbar sind, zu erweitern.

Bevorzugt erfolgen die Fräsbearbeitung und das Wälzschälen durch die gleiche Verzahnmaschine. Hierdurch können Kosten und Zeit bei der Herstellung der verzahnten Werkstücke gespart werden.

Weiter bevorzugt erfolgen die Fräsbearbeitung und das Wälzschälen mit der gleichen Aufspannung des Werkstücks in einer Werkstückaufnahme der Verzahnmaschine. Dadurch, dass das Werkstück für beide Bearbeitungsschritte in der Werkstückaufnahme verbleibt, verringert sich die für die Herstellung notwendige Zykluszeit.

Alternativ oder zusätzlich kann ein zur Fräsbearbeitung eingesetztes Fräswerkzeug und ein zum Wälzschälen eingesetztes Wälzschälwerkzeug zumindest bei der Durchführung des jeweiligen Bearbeitungsschritts in der gleichen Werkzeugaufnahme der Verzahnmaschine aufgenommen sein und/oder durch die Achsen des gleichen Bearbeitungskopfes der Verzahnmaschine verfahren werden. Hierdurch werden der konstruktive Aufwand und die Kosten für die Verzahnmaschine verringert.

In eine ersten, bevorzugten Variante sind das Fräswerkzeug und das Wälzschälwerkzeug auf dem gleichen Werkzeugdorn aufgespannt. Hierdurch werden der konstruktive Aufwand und die Zykluszeit minimiert, da mit nur einer Werkzeugaufnahme beide Bearbeitungsschritte ohne Werkzeugwechsel durchgeführt werden können.

In einer zweiten Variante weist die Verzahnmaschine zwei Werkzeugaufnahmen auf, so dass das Fräswerkzeug und das Wälzschälwerkzeug jeweils in einer Werkzeugaufnahme aufgenommen werden können. Auch hierdurch wird eine kurze Zykluszeit ermöglich, da die Notwendigkeit eines Werkzeugwechsels entfällt. Bevorzugt sind die beiden Werkzeugaufnahmen an einem Bearbeitungskopf angeordnet und können daher über die gleichen Verfahrachsen der Verzahnmaschine verfahren werden.

In einer dritten Variante weist die Verzahnmaschine einen automatischen Werkzeugwechsler zum Wechseln zwischen dem Fräswerkzeug und dem Wälzschälwerkzeug auf. Hierdurch wird nur eine Werkzeugaufnahme benötigt. Aufgrund der erhöhten Zykluszeit bietet sich ein solches Vorgehen eher bei der Herstellung von Verzahnungen mit längerer Bearbeitungszeit und kleinerer Losgröße an.

In einer bevorzugten Ausgestaltung der vorliegenden Erfindung erfolgt bei der Fräsbearbeitung und/oder beim Wälzschälen eine Vorschubbewegung des jeweiligen Werkzeuges parallel zu einer Achse der Werkstückaufnahme.

Dies kann insbesondere über einen parallel zur Achse der Werkstückaufnahme verfahrbaren Schlitten des Bearbeitungskopfes der Verzahnmaschine erfolgen.

Bevorzugt ist die Rotationsbewegung der Werkstückaufnahme an die Vorschubbewegung und/oder eine Rotationsbewegung der Werkzeugaufnahme gekoppelt.

In einer bevorzugten Ausgestaltung der vorliegenden Erfindung wird der Bearbeitungskopf der Verzahnmaschine und insbesondere die Werkzeugaufnahme, in welcher das Werkzeug zur Fräsbearbeitung und das Werkzeug zum Wälzschälen aufgenommen sind, zwischen den beiden Bearbeitungsschritten relativ zur Achse der Werkstückaufnahme verschwenkt. Hierdurch können die für die beiden Bearbeitungsschritte jeweils notwendigen, unterschiedlichen Achskreuzwinkel zur Verfügung gestellt werden.

Bevorzugt erfolgt das Verschwenken um eine senkrecht zur Achse der Werkstückaufnahme und/oder Werkzeugaufnahme verlaufende Verschwenkachse des Bearbeitungskopfes.

Bevorzugt erfolgt die Fräsbearbeitung mit einem ersten Achskreuzwinkel zwischen Werkzeug und Werkstück und die Wälzschälbearbeitung mit einem zweiten Achskreuzwinkel zwischen Werkzeug und Werkstück, wobei die Differenz zwischen dem ersten und dem zweiten Achskreuzwinkel mehr als 45° beträgt. Hierdurch wird den für die Fräsbearbeitung und die Wälzschälbearbeitung sehr unterschiedlichen Achskreuzwinkeln Rechnung getragen. Insbesondere kann die Differenz dabei mehr als 70° betragen. Bevorzugt wird der Bearbeitungskopf daher zwischen den beiden Bearbeitungsschritten um einen entsprechenden Schwenkwinkel verschwenkt.

Alternativ oder zusätzlich kann die Differenz zwischen dem ersten und dem zweiten Achskreuzwinkel weniger als 135° betragen, bevorzugt weniger als 110°, weiter bevorzugt weniger als 100°.

Da ein solcher Schwenkwinkel auf bekannten Fräsmaschinen nicht zur Verfügung steht, wird bevorzugt eine speziell für die Durchführung sowohl einer Fräsbearbeitung als auch einer Wälzschälbewegung angepassten Verzahnmaschine mit einem entsprechend großen Verschwenkbereich eingesetzt.

Bevorzugt wird die Werkzeugaufnahme, in welcher das Werkzeug zur Fräsbearbeitung und das Werkzeug zum Wälzschälen aufgenommen sind, zwischen den beiden Bearbeitungsschritten relativ zum Werkstück vershiftet. Hierdurch kann, sind beide Werkzeuge auf dem gleichen Dorn aufgespannt, das andere Werkzeug in Eingriff mit dem zu bearbeitenden Bereich des Werkstücks gebracht werden.

Bevorzugt erfolgt das vershiften über einen parallel zur Drehachse der Werkzeugaufnahme verfahrbaren Schlitten eines die Werkstückaufnahme tragenden Bearbeitungskopfes und/oder über zwei eine Ebene senkrecht zur Schwenkachse aufspannende Bewegungsachsen eines die Werkstückaufnahme tragenden Bearbeitungskopfes.

In einer bevorzugten Ausgestaltung der vorliegenden Erfindung erfolgt die Fräsbearbeitung am ungehärteten Werkstück. Alternativ oder zusätzlich wird die Fräsbearbeitung zumindest zur Schruppbearbeitung einer Verzahnung des Werkstücks eingesetzt, insbesondere zur Schruppbearbeitung auf einem Werkstück-Rohling. Der Werkstück-Rohling kann eine rotationssymmetrische Form oder eine Vorverzahnung aufweisen.

Die Wälzschälbearbeitung kann in einer bevorzugten Ausgestaltung der vorliegenden Erfindung am ungehärteten Werkstück erfolgen. Alternativ oder zusätzlich kann die Wälzschälbearbeitung zumindest zur Schlichtbearbeitung einer Verzahnung eingesetzt werden. Je nach Ausführungsvariante kann die Wälzschälbearbeitung dabei z.B. zur Herstellung einer Verzahnung auf einem Werkstück-Rohling eingesetzt werden, oder zur Schlichtbearbeitung einer durch die Fräsbearbeitung erzeugten Verzahnung.

In einer ersten Variante der vorliegenden Erfindung werden die Fräsbearbeitung und die Wälzschälbearbeitung zur Herstellung der gleichen Verzahnung eingesetzt. Insbesondere kann die Fräsbearbeitung zur Schruppbearbeitung einer Verzahung und darauffolgend eine Wälzschälbearbeitung am verzahnten Werkstück zur Schlichtbearbeitung einer Verzahnung durchgeführt werden.

Mit den Begriffen Schruppbearbeitung und Schlichtbearbeitung einer Verzahnung werden keine absoluten Verzahnungsqualitäten bezeichnet, sondern die relative Verzahnungsqualität der durch die Fräsbearbeitung und das Wälzschälen erzeugten Verzahnungsgeometrie, wobei die durch die Fräsbearbeitung erzeugte Verzahnungsqualität gegenüber der durch das Wälzschälen erzeugten Verzahnungsqualität gröber bzw. geringer ist.

Die erste Variante kombiniert daher die jeweiligen Vorteile der Fräsbearbeitung und die Wälzschälbearbeitung und vermeidet deren jeweilige Nachteile. Die Fräsbearbeitung erlaubt einen hohen effektiven Materialabtrag, was dann bedingt durch die Vorschubmarkierungen zu einer Zahnflanke mit großen Abweichungen von der idealen Zahnflanke führt. Das Wälzschälen erzeugt, bedingt durch eine andere Eingriffskinematik und geringe Vorschübe, eine Zahnflanke mit nur geringen Abweichungen, wobei die Spanbildung durch die andere Eingriffskinematik insbesondere bei der Schruppbearbeitung mit einem hohen Materialabtrag mit einem großen Verschleiß des Werkzeugs verbunden ist. Erfindungsgemäß werden die oben genannten Probleme vermieden, da so durch das Wälzschälen nur noch das nach der Fräsbearbeitung verbleibende Aufmaß abgetragen werden muss, d.h. der Materialabtrag durch das Wälzschälen erheblich verringert wird, da so die Hauptzerspanarbeit durch das Fräsen geleistet wird und die Verzahnqulität durch das Wälzschälen erzeugt wird.

In einer zweiten Variante der vorliegenden Erfindung handelt es sich bei der erfindungsgemäß hergestellten Verzahnung um eine Schneckenverzahnung. Solche Schneckenverzahnungen waren bisher nur mit aufwendigen Spezialmaschinen herstellbar. Die vorliegende Erfindung erlaubt nun eine erheblich einfachere Herstellung und bietet zudem eine sehr hohe Verzahnungsqualität.

Bevorzugt erfolgt die Herstellung der Schneckenverzahnung gemäß der zweiten Variante dabei mittels eines Verfahrens gemäß der ersten Variante, so dass die Fräsbearbeitung und die Wälzschälbearbeitung nacheinander zur Herstellung der Schneckenverzahnung eingesetzt werden.

Insbesondere kann das erfindungsgemäße Verfahren gemäß der zweiten Variante zur Herstellung eines Antriebselementes mit Schneckenverzahnung eines Lenkantriebs eines Fahrzeugs eingesetzt werden.

In einer bevorzugten Ausgestaltung der vorliegenden Erfindung, insbesondere einer bevorzugten Ausgestaltung der ersten und/oder zweiten Variante, erfolgt die Fräsbearbeitung durch einen scheibenförmigen Profilfräser, welcher bevorzugt unabhängig von der Drehbewegung der Werkstückaufnahme rotiert.

Bevorzugt wird der Profilfräser bei der Fräsbearbeitung parallel zur Achse der Werkstückaufnahme verfahren, während das Werkstück so um seine Achse gedreht wird, dass der Profilfräser einen Schneckengang erzeugt wobei die Fräsbearbeitung mit einem von dem Steigungswinkel der Schneckenverzahnung abhängigen Achskreuzwinkel erfolgt, wobei der Achskreuzwinkel bevorzugt in etwa dem Steigungswinkel entspricht.

In einer bevorzugten Ausgestaltung der vorliegenden Erfindung, insbesondere einer bevorzugten Ausgestaltung der ersten und/oder zweiten Variante, erfolgt das Wälzschälen durch eine Wälzkopplung zwischen dem Wälzschälwerkzeug und dem Werkstück, wobei bevorzugt das Wälzschälwerkzeug beim Wälzschälen parallel zur Achse der Werkstückaufnahme verfahren wird.

Erfindungsgemäß kann die Fräsbearbeitung z.B. mit einem Achskreuzwinkel zwischen dem Fräswerkzeug und dem Werkstück im Bereich von +- 5 ° und +- 40°, insbesondere im Bereich von +- 10° und +- 20° durchgeführt werden.

Die Wälzschälbearbeitung kann z.B. mit einem Achskreuzwinkel zwischen dem Fräswerkzeug und dem Werkstück im Bereich von 90° +- 40° durchgeführt werden, insbesondere mit einem Achskreuzwinkel zwischen dem Fräswerkzeug und dem Werkstück im Bereich von 90° +- 20°.

In einer dritten Variante der vorliegenden Erfindung werden die Fräsbearbeitung und die Wälzschälbearbeitung zur Herstellung zweier unterschiedlicher Verzahnungen des Werkstücks eingesetzt.

Insbesondere werden eine Fräsbearbeitung zur Herstellung einer ersten Verzahnung und eine Wälzschälbearbeitung zur Herstellung einer zweiten Verzahnung durchgeführt. Bevorzugt weist die erste Verzahnung einen größeren Durchmesser auf als die zweite Verzahnung und/oder bildet eine Störkontur für die zweite Verzahnung. Alternativ oder zusätzlich können auch Werkstückkonturen in der Nähe einer der zu bearbeitenden Verzahnungen eine Störkontur darstellen und so die Bearbeitbarkeit der Verzahnung mittels Fräsverfahren einschränken..

Die dritte Variante der vorliegenden Erfindung macht sich zu Nutze, dass durch das Wälzschälen Mehrfach-Verzahnungen herstellbar sind, welche durch eine Fräsbearbeitung nicht mehr herstellbar wären, da die eine Verzahnung als Störkontur bei der Herstellung der anderen Verzahnung durch Fräsen wirkt. Insbesondere kann durch Wälzschälen eine zweite Verzahnung auf dem Werkstück hergestellt werden, auch wenn diese einen nur geringen axialen Abstand zu der ersten Verzahnung aufweist. Die Fräsbearbeitung für die erste Verzahnung hat daher die Vorteile einer hohen Zerspanungseffizienz. Der relativ hohe Verschleiß des Wälzschälens wird dagegen in Kauf genommen, um solche Werkstücke überhaupt noch herstellen zu können, insbesondere ohne einen Maschinenwechsel.

In einer vierten Variante der vorliegenden Erfindung handelt es sich bei der Verzahnung oder den Verzahnungen des Werkstücks um eine oder mehrere Stirnradverzahnungen.

Insbesondere kann das erfindungsgemäße Verfahren zur Herstellung eines Werkstücks mit einer Mehrfach-Verzahnung eingesetzt werden, insbesondere einer Welle mit mindestens zwei nebeneinander angeordneten Stirnradverzahnungen, insbesondere mit unterschiedlichem Durchmesser. Alternativ oder zusätzlich können auch Werkstückkonturen in der Nähe einer der Verzahnungen eine Störkontur darstellen.

Bevorzugt kommt dabei zur Herstellung eines Werkstücks mit mehreren Stirnradverzahnungen gemäß der vierten Variante ein Verfahren gemäß der dritten Variante zum Einsatz, bei welchem die Fräsbearbeitung und die Wälzschälbearbeitung zur Herstellung zweier unterschiedlicher Verzahnungen des Werkstücks eingesetzt werden.

In einer bevorzugten Ausgestaltung der vorliegenden Erfindung, insbesondere einer bevorzugten Ausgestaltung der dritten und/oder vierten Variante, erfolgt die Fräsbearbeitung durch einen Wälzfräser, dessen Rotationsbewegung an die Rotationsbewegung der Werkstückaufnahme gekoppelt ist, wobei bevorzugt der Wälzfräser bei der Fräsbearbeitung parallel zur Achse der Werkstückaufnahme verfahren wird. Ein Wälzfräser kann jedoch auch bei der ersten und/oder zweiten Variante zum Einsatz kommen.

In einer bevorzugten Ausgestaltung der vorliegenden Erfindung, insbesondere einer bevorzugten Ausgestaltung der dritten und/oder vierten Variante, erfolgt das Wälzschälen durch eine Wälzkopplung zwischen dem Wälzschälwerkzeug und dem Werkstück, wobei das Wälzschälwerkzeug beim Wälzschälen parallel zur Achse der Werkstückaufnahme verfahren wird.

Die Fräsbearbeitung kann z.B. mit einem Achskreuzwinkel zwischen dem Fräswerkzeug und dem Werkstück im Bereich von 90° +- 45°, insbesondere im Bereich von 90° +- 35° durchgeführt werden.

Die Wälzschälbearbeitung kann z.B. mit einem Achskreuzwinkel zwischen dem Fräswerkzeug und dem Werkstück im Bereich von +- 45°, insbesondere im Bereich von +- 35° durchgeführt werden.

Gemäß einem unabhängigen Aspekt der vorliegenden Erfindung umfasst diese weiterhin ein Verfahren zur Verzahnbearbeitung eines Werkstücks, bei welchem nur eine Fräsbearbeitung des Werkstücks oder eine Bearbeitung durch Wälzschälen erfolgt, wie sie im Rahmen der oben beschriebenen Verfahren dargestellt wurde, insbesondere nur eine Fräsbearbeitung des Werkstücks oder eine Bearbeitung durch Wälzschälen gemäß mindestens einer der oben beschriebenen Varianten.

Die vorliegende Erfindung umfasst ein Verfahren zur Herstellung eines Werkstücks mit einer Schneckengeometrie, wobei die Herstellung der Schneckengeometire durch eine Fräsbearbeitung des Werkstücks erfolgt. In einer bevorzugten Ausgestaltung der vorliegenden Erfindung erfolgt die Fräsbearbeitung durch einen Profilfräser, welcher bevorzugt unabhängig von der Drehbewegung der Werkstückaufnahme rotiert. Bevorzugt wird der Profilfräser bei der Fräsbearbeitung parallel zur Achse der Werkstückaufnahme verfahren, während das Werkstück so um seine Achse gedreht wird, dass der Profilfräser einen Schneckengang erzeugt.

Die Fräsbearbeitung kann mit einem von dem Steigungswinkel der Schneckenverzahnung abhängigen Achskreuzwinkel erfolgen, wobei der Achskreuzwinkel bevorzugt in etwa dem Steigungswinkel entspricht.

Alternativ oder zusätzlich kann die Fräsbearbeitung z.B. mit einem Achskreuzwinkel zwischen dem Fräswerkzeug und dem Werkstück im Bereich von +- 5° und +- 40°, insbesondere im Bereich von +- 10° und +- 20° durchgeführt werden.

Bevorzugt wird der Achskreuzwinkel dabei durch ein Verschwenken eines Bearbeitungskopfes einer Verzahnmaschine eingestellt, insbesondere einer Verzahnmaschine, wie sie im folgenden näher beschrieben wird.

Die vorliegende Erfindung umfasst weiterhin eine Verzahnmaschine gemäß einem ersten Aspekt zur Durchführung mindestens eines Verfahrens, wie es oben beschrieben wurde. Die Verzahnmaschine ist dabei bevorzugt kinematisch und/oder steuerungstechnisch zur Durchführung eines erfindungsgemäßen Verfahrens geeignet.

Die Verzahnmaschine weist eine Werkstückaufnahme und eine Werkzeugaufnahme auf, wobei die Werkzeugaufnahme bevorzugt über Bewegungsachsen der Verzahnmaschine gegenüber der Werkstückaufnahme verfahrbar ist.

Bevorzugt ist die Werkzeugaufnahme an einem Bearbeitungskopf angeordnet, welcher über Bewegungsachsen der Verzahnmaschine verfahrbar ist.

Bevorzugt ist insbesondere die Steuerung der Verzahnmaschine so ausgeführt, dass mindestens ein erfindungsgemäßes Verfahren durchführbar ist, wobei die Durchführung bevorzugt automatisiert erfolgt.

Insbesondere kann die Verzahnmaschine eine Steuerung zur Ansteuerung der Bewegungsachsen der Verzahnmaschine aufweisen, welche eine Funktion zur Durchführung mindestens eines erfindungsgemäßen Verfahrens aufweist, insbesondere eine Funktion zur automatisierten Durchführung mindestens eines erfindungsgemäßen Verfahrens, insbesondere zur Herstellung einer Vielzahl identischer verzahnter Werkstücke.

Weiter bevorzugt kann die Steuerung Funktionen zur Durchführung mehrerer der oben beschriebenen alternativen Verfahren aufweisen.

Die Funktionen der Steuerung werden bevorzugt durch Code zur Ansteuerung der Bewegungsachsen implementiert, welcher auf einem Mikrokontroller und/oder Prozessor der Steuerung abläuft und die Bewegungsachsen der Verzahnmaschine so ansteuert, dass auf der Verzahnmaschine ein erfindungsgemäßes Verfahren durchgeführt wird, bevorzugt automatisiert abläuft. Ein automatisierter Ablauf erfordert dabei bevorzugt keinen Eingriff eines Benutzers in die Steuerung. Der Code kann dabei in einem Speicher der Steuerung abgelegt sein.

In einem zweiten, unabhängigen Aspekt umfasst die vorliegende Erfindung eine Verzahnmaschine mit einer Werkstückaufnahme und einer Werkzeugaufnahme, welche über Bewegungsachsen der Verzahnmaschine gegenüber der Werkstückaufnahme verfahrbar ist, wobei die Werkzeugaufnahme an einem Bearbeitungskopf angeordnet ist, welcher über Bewegungsachsen der Verzahnmaschine verfahrbar ist, wobei der Bearbeitungskopf der Verzahnmaschine eine Schwenkachse aufweist, welche bevorzugt senkrecht auf der Achse der Werkstückaufnahme steht.

Die Verzahnmaschine ist dadurch gekennzeichnet, dass die Schwenkachse einen Schwenkwinkelbereich von mehr als 90° und/oder einen Schwenkwinkelbereich, welcher sowohl eine parallele als auch eine senkrechte Anordnung der Drehachse der Werkzeugaufnahme zu der Drehachse der Werkstückaufnahme erlaubt.

Die Verzahnmaschine gemäß dem zweiten Aspekt ist durch den großen Schwenkwinkelbereich bevorzugt kinematisch zur Durchführung eines erfindungsgemäßen Verfahrens besonders gut geeignet. Die Steuerung muss dabei nicht notwendigerweise eine Funktion zur Durchführung eines erfindungsgemäßen Verfahrens aufweisen. Die kinematische Ausgestaltung erlaubt es jedoch bevorzugt, die Steuerung durch eine neue Software mit einer entsprechenden Funktion nachzurüsten und die Verzahnmaschine dann zur Durchführung eines erfindungsgemäßen Verfahrens einzusetzen.

Alternativ oder zusätzlich kann die Verzahnmaschine gemäß dem zweiten Aspekt zur Durchführung der Fräsbearbeitung, wie sie oben im Rahmen des erfindungsgemäßen Verfahrens näher beschrieben wurde, eingesetzt werden, insbesondere der Fräsbearbeitung gemäß der oben beschriebenen zweiten Variante, d.h. zur Herstellung einer Schneckenverzahnung bzw. Schneckengeometrie. Insbesondere kann die Verzahnmaschine gemäß dem zweiten Aspekt eine Funktion zur Durchführung eines solchen Verfahrens aufweisen, insbesondere zur automatisierten Durchführung.

Die Schwenkachse weist bevorzugt einen Schwenkwinkelbereich von mehr als 110°, weiter bevorzugt von mehr als 130° auf. Alternativ oder zusätzlich kann die Schwenkachse einen Schwenkwinkelbereich aufweisen, welcher einen Bereich von - 20° bis + 90° relativ zur Achse der Werkstückaufnahme umfasst, insbesondere einen Bereich von - 30° bis + 100° relativ zur Achse der Werkstückaufnahme.

Die Verzahnmaschine gemäß dem zweiten Aspekt ist bevorzugt gemäß dem ersten Aspekt ausgeführt und weist bevorzugt die dort beschriebene Steuerung und/oder Funktion auf.

Die vorliegende Erfindung umfasst weiterhin eine Software zur Ansteuerung einer Verzahnmaschine, insbesondere zur Ansteuerung einer Verzahnmaschine gemäß dem oben beschriebenen ersten oder zweiten Aspekt, mit einer Funktion zur Durchführung mindestens eines erfindungsgemäßen Verfahrens.

Insbesondere kann die Software eine Funktion zur automatisierten Durchführung eines erfindungsgemäßen Verfahrens aufweisen, insbesondere zur Herstellung einer Vielzahl verzahnter Werkstücke.

Bevorzugt weist die Software Code zur Ansteuerung der Bewegungsachsen auf, welcher auf einem Mikrokontroller und/oder Prozessor der Steuerung einer Verzahnmaschine ablaufen kann und die Bewegungsachsen der Verzahnmaschine so ansteuert, dass auf der Verzahnmaschine ein erfindungsgemäßes Verfahren durchgeführt wird, bevorzugt automatisiert abläuft. Ein automatisierter Ablauf erfordert dabei bevorzugt keinen Eingriff eines Benutzers in die Steuerung. Der Code kann dabei in einem Speicher der Steuerung ablegbar sein.

Die Software liegt dabei bevorzugt in einem Speicher und/oder Speichermedium abgespeichert vor.

Die Verzahnmaschine weist bevorzugt jeweils Antriebe, insbesondere NC-Antriebe zur Erzeugung einer Rotationsbewegung der Werkstückaufnahme und der Werkzeugaufnahme um deren jeweilige Rotationsachsen auf.

Die Verzahnmaschine weist bevorzugt eine oder mehrere Linearachsen, insbesondere NC-Linearachsen zur Erzeugung einer Relativbewegung zwischen einem in der Werkzeugaufnahme aufgenommenen Werkzeug und einem in der Werkstückaufnahme aufgenommenen Werkstück auf.

Die Linearachsen umfassen bevorzugt eine Linearachse X1 zur Veränderung des Achsabstands zwischen den Rotationsachsen der Werkstückaufnahme und der Werkzeugaufnahme. Die Linearachse X1 steht bevorzugt senkrecht auf der Rotationsachsen der Werkstückaufnahme und/oder der Werkzeugaufnahme.

Die Linearachsen umfassen bevorzugt eine Linearachse Z1 zum Verfahren der Werkzeugaufnahme parallel zur Rotationsachse der Werkstückaufnahme. Die Linearachse Z1 steht bevorzugt senkrecht auf der Linearachse X1.

Die Linearachsen umfassen bevorzugt eine Linearachse V1 zum Verfahren der Werkzeugaufnahme parallel zur ihrer Rotationsachse. Alternativ oder zusätzlich kann eine Linearachse Y1 zum Verfahren senkrecht zu den Linearachsen X1 und Z1 vorgesehen sein.

Die Verschwenkachse A1 steht bevorzugt senkrecht auf den Linearachsen X1 und Z1 und erlaubt bevorzugt ein Verschwenken der V1-Achse.

Die vorliegende Erfindung wird nun anhand von Ausführungsbeispielen sowie Zeichnungen näher erläutert. Dabei zeigen:
- Fig. 1:: eine Prinzipdarstellung eines Ausführungsbeispiels einer erfindungsgemäßen Verzahnmaschine mit den relevanten Maschinenachsen;
- Fig. 2:: eine Fräsbearbeitung in einem ersten Ausführungsbeispiel eines erfindungsgemäßen Verfahrens in einer Seitenansicht;
- Fig. 3:: eine Wälzschälbearbeitung in dem ersten Ausführungsbeispiel der vorliegenden Erfindung in einer perspektivischen Ansicht;
- Fig. 4:: die in Fig. 3 gezeigte Wälzschälbearbeitung des ersten Ausführungsbeispiels in einer Vorderansicht;
- Fig. 5:: die in Fig. 3 und 4 gezeigte Wälzschälbearbeitung des ersten Ausführungsbeispiels in einer Draufsicht;
- Fig. 6:: eine Wälzfräsbearbeitung in einem zweiten Ausführungsbeispiel eines Verfahrens gemäß der vorliegenden Erfindung in einer perspektivischen Ansicht;
- Fig. 7:: die in Fig. 6 gezeigte Wälzfräsbearbeitung des zweiten Ausführungsbeispiels des erfindungsgemäßen Verfahrens in einer Vorderansicht;
- Fig. 8:: die in Fig. 6 und 7 gezeigte Wälzfräsbearbeitung des zweiten Ausführungsbeispiels in einer Seitenansicht;
- Fig. 9:: eine Wälzschälbearbeitung in dem zweiten Ausführungsbeispiel des erfindungsgemäßen Verfahrens in einer perspektivischen Ansicht und
- Fig. 10:: die in Fig. 9 gezeigte Wälzschälbearbeitung des zweiten Ausführungsbeispiels in einer Vorderansicht.

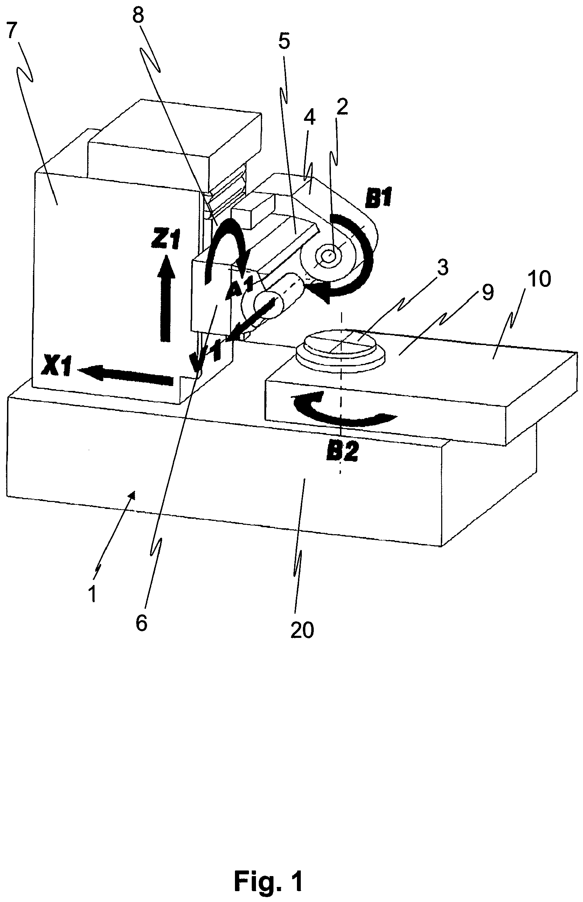

Fig. 1 zeigt ein Ausführungsbeispiel einer erfindungsgemäßen Verzahnmaschine. Die Verzahnmaschine 1 weist eine Werkzeugaufnahme 2 auf, welche an einem Bearbeitungskopf 4 der Verzahnmaschine angeordnet ist und über Maschinenachsen der Verzahnmaschine relativ zu einer Werkstückaufnahme 3 bewegbar ist.

Die Werkzeugaufnahme 2 weist eine Werkzeugspindel auf, in welche ein oder mehrere an einem Werkzeugdorn angeordnete Werkzeuge einspannbar sind. Die Werkzeugaufnahme 2 weist eine Rotationsachse B1 auf, welche durch einen entsprechenden Antrieb der Verzahnmaschine in Rotation versetzt werden kann. Die Werkzeuge können in der Werkzeugaufnahme in einer ersten Ausführungsform einseitig gelagert sein. Bevorzugt weist die Werkzeugaufnahme 2 jedoch ein Gegenlager auf, sodass der die Werkzeuge tragende Werkzeugdorn zweiseitig gelagert in der Werkzeugaufnahme 2 angeordnet ist.

Die Werkstückaufnahme 3 erlaubt die Aufnahme von Werkstücken, um diese durch in der Werkzeugaufnahme 2 aufgenommene Werkzeuge zu bearbeiten. Die Werkstückaufnahme 3 weist eine Rotationsachse B2 auf, durch welche die Werkstückaufnahme 3 über einen Antrieb der Verzahnmaschine in Rotation versetzt werden kann. Die Werkstückaufnahme 3 ist über die Rotationsachse B2 an einem Maschinentisch 9 angeordnet. Die Werkstückaufnahme 3 erlaubt in einer ersten Ausführungsform eine einseitige Lagerung der Werkstücke. Bevorzugt weist jedoch auch die Werkstückaufnahme 3 ein Gegenlager auf, sodass die Werkstücke zweiseitig in der Werkstückaufnahme 3 gelagert sind.

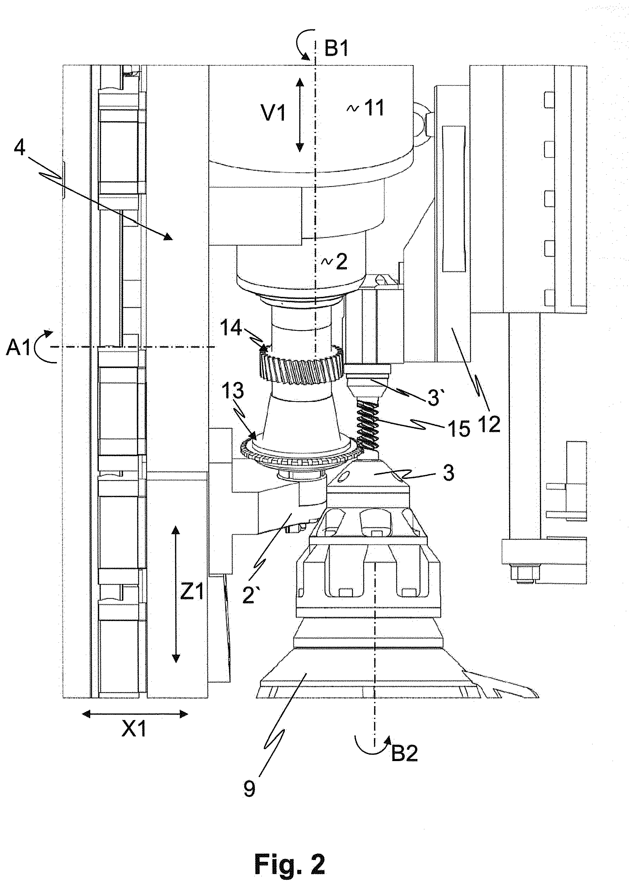

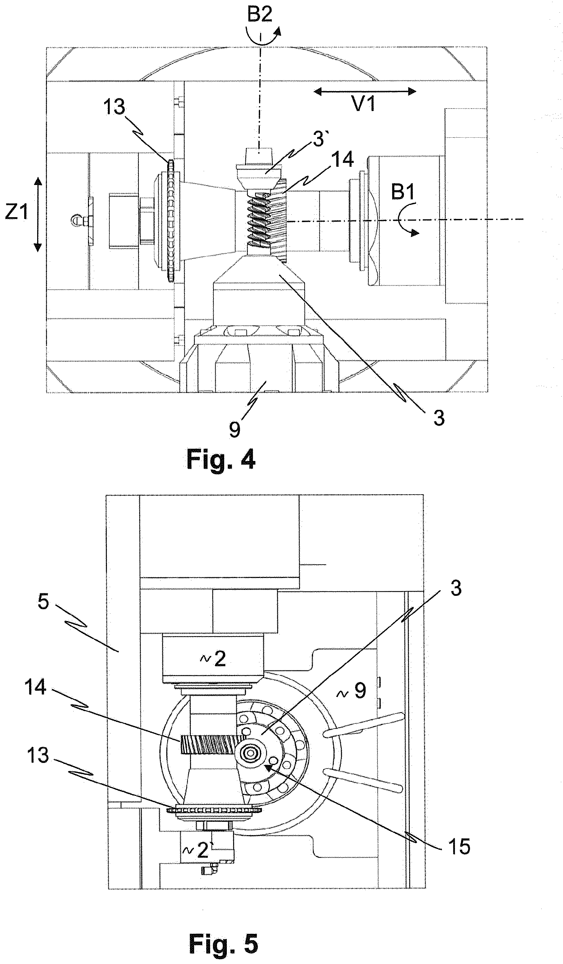

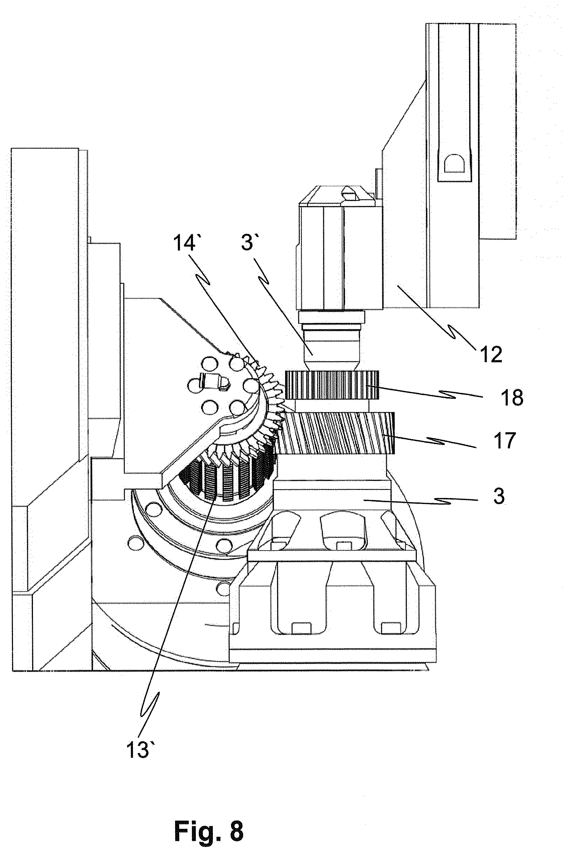

In Fig. 2 bis 10 sind neben den bereits im Hinblick auf Fig. 1 beschriebenen Komponenten auch die in Fig. 1 nicht dargestellten Gegenlager 2' bzw. 3' der Werkzeugaufnahme 2 bzw. Werkstückaufnahme 3 dargestellt. Der Gegenhalter 3' der Werkstückaufnahme 3 ist an einem Gegenhalterarm 12 der Verzahnmaschine, welcher in Fig. 1 nicht dargestellt ist, angeordnet. Der Gegenhalterarm erlaubt ein Verfahren des Gegenhalters 3' der Werkstückaufnahme 3 parallel zur Rotationsachse B2, um unterschiedliche breite Werkstücke bearbeiten und die Werkstücke schnell wechseln zu können. Das Gegenlager 2' der Werkzeugaufnahme 2 ist am Bearbeitungskopf 4 angeordnet und kann durch Verfahren parallel zu Richtung der Werkzeugachse an unterschiedlich breite Werkzeuge angepasst werden.

Auf dem Maschinenbett 20 ist ein Maschinenständer 7 mit dem Bearbeitungskopf 4 vorgesehen. Der Maschinenständer 7 ist über eine Linearachse X1 verfahrbar, durch welche der Achsabstand zwischen der Rotationsachse B1 der Werkzeugaufnahme der Rotationsachse B2 der Werkstückaufnahme 3 veränderbar ist. Die Linearachse X1 verläuft hierfür bevorzugt senkrecht zu einer durch die Richtung der Rotationsachsen B1 und B2 definierten Ebene.

An dem Maschinenständer 7 ist eine Führung 8 vorgesehen, entlang welcher ein Schlitten 6 des Bearbeitungskopfes 4 verfahrbar ist. Der Bearbeitungskopf kann hierdurch entlang einer Linearachse Z1, welche parallel zu der Rotationsachse B2 der Werkstückaufnahme 3 verläuft, verfahren werden.

Der Bearbeitungskopf 4 mit der Werkzeugaufnahme 2 ist über eine Schwenkachse A1 an dem Schlitten 6 angeordnet. Die Schwenkachse A1 verläuft bevorzugt parallel zu der Linearachse X1 und/oder steht senkrecht auf einer durch die Richtungen der Drehachsen B1 und B2 aufgespannten Ebene. Besonders bevorzugt schneidet die Schwenkachse A1 die Rotationsachsen B1 und B2 der Werkzeugaufnahme 2 bzw. Werkstückaufnahme 3.

Der Bearbeitungskopf 4 weist gemäß dem Ausführungsbeispiel weiterhin einen Schlitten 5 auf, welcher eine Linearachse V1 zur Verfügung stellt, über welche die Werkzeugaufnahme 2 in Richtung ihrer Rotationsachse B1 vershiftet werden kann. Im Ausführungsbeispiel ist die Schwenkachse A1 dabei zwischen den beiden Linearachsen Z1 und V1 angeordnet.

Alternativ zu der gezeigten Ausgestaltung mit einer Shiftachse V1 wäre es denkbar, eine Achse Y1 vorzusehen, über welche der Maschinenständer 7 und/oder der Schlitten 6 in einer Richtung senkrecht zu den Linearachsen X1 und Z1 verfahrbar wäre. Eine Verfahrbewegung in Richtung der Rotationsachse B1 der Werkzeugaufnahme 2 könnte dann durch eine Überlagerung von Linearbewegungen der Achsen Z1 und Y1 erzeugt werden.

Auf dem Tischrahmen 10 kann beispielsweise ein Gegenständer zur Aufnahme des Gegenhalters montiert werden, aber auch andere Automationseinrichtungen zum Wechseln der Werkstücke oder eine andere Anbindung an ein Automationssystem angeordnet werden.

Andere mechanische Ausgestaltungen der Verzahnmaschine zur Bereitstellung der oben beschriebenen Rotations-, Linear- und Schwenkachsen sind ebenfalls denkbar.

Bei üblichen Fräsverfahren wird durch das Verschwenken um die Schwenkachse A1 ein für die Herstellung von Schrägverzahnungen notwendiger Achskreuzwinkel zwischen den Rotationsachsen B1 und B2 zur Verfügung gestellt. Bei aus dem Stand der Technik bekannten Fräsmaschinen weist die Schwenkachse A1 daher üblicherweise einen Schwenkwinkelbereich von +/-45° um eine Schwenkstellung auf, in welcher die Rotationsachse B1 der Werkzeugaufnahme 2 senkrecht auf der Rotationsachse B2 der Werkstückaufnahme 3 steht.

Gemäß einem ersten Aspekt der vorliegenden Erfindung weist die Schwenkachse A1 der erfindungsgemäßen Verzahnmaschine dagegen einen Schwenkwinkelbereich auf, der ein Verschwenken der Rotationsachse B1 der Werkzeugaufnahme 2 aus einer Position senkrecht zur Rotationsachse B2 der Werkstückaufnahme 3 in eine Position parallel zur Rotationsachse B2 der Werkstückaufnahme 3 erlaubt. Alternativ oder zusätzlich ist der Schwenkwinkelbereich größer als 90°. Beispielsweise kann der Schwenkwinkelbereich einen Bereich von -20° bis +100° bezüglich einer Stellung der Rotationsachse B1, welche senkrecht auf der Rotationsachse B2 steht, umfassen. Im Ausführungsbeispiel beträgt der Schwenkwinkelbereich bspw. - 45° bis +110° zu der Stellung der Rotationsachse B1, welche senkrecht auf der Rotationsachse B2 steht.

Der größere Schwenkwinkelbereich der A1-Achse kann dazu eingesetzt werden, um mittels des gleichen Bearbeitungskopfes sowohl ein Fräsverfahren, als auch ein Wälzschälverfahren an einem in der Werkstückaufnahme 3 aufgenommenen Werkstück durchzuführen. Das hierfür eingesetzte Fräswerkzeug bzw. Wälzschälwerkzeug kann hierfür in Werkzeugaufnahme 2 aufgenommen werden. Bevorzugt sind das Fräswerkzeug und das Wälzschälwerkzeug auf einem Dorn aufgespannt und gemeinsam in der Werkzeugaufnahme 2 aufgenommen. Durch den großen Schwenkwinkelbereich der Schwenkachse A1 können sowohl die für die Fräsbearbeitung als auch die für die Wälzschälbearbeitung notwendigen, sehr unterschiedlichen Achskreuzwinkel bereitgestellt werden.

Gemäß einem zweiten Aspekt der vorliegenden Erfindung ist die Steuerung der Verzahnmaschine so ausgestaltet, dass auf der Maschine eines der im Folgenden beschriebenen Verzahnverfahren durchgeführt werden kann. Bevorzugt weist die Steuerung hierfür eine Funktion zur automatischen Durchführung eines der im Folgenden beschriebenen Verzahnverfahren auf. Bevorzugt können durch diese Funktion eine Vielzahl von identischen Werkstücken automatisiert auf der Verzahnmaschine hergestellt werden.

Eine Verzahnmaschine gemäß dem zweiten Aspekt weist bevorzugt den Schwenkwinkelbereich gemäß dem ersten Aspekt auf. Alternative konstruktive Ausgestaltungen der erfindungsgemäßen Verzahnmaschine gemäß dem zweiten Aspekt sind jedoch ebenfalls denkbar.

Im Folgenden werden ein erstes und ein zweites Ausführungsbeispiel eines erfindungsgemäßen Verfahrens näher dargestellt. Beide Ausführungsbeispiele der erfindungsgemäßen Verfahren werden anhand des in Fig. 1 gezeigten Ausführungsbeispiels einer erfindungsgemäßen Verzahnmaschine beschrieben. Die erfindungsgemäßen Verfahren sind jedoch auch bei einer alternativen mechanischen Ausgestaltung der Verzahnmaschine durchführbar.

Beiden Ausführungsbeispielen des erfindungsgemäßen Verfahrens ist gemeinsam, dass auf der Verzahnmaschine sowohl eine Fräsbearbeitung, als auch eine Wälzschälbearbeitung des Werkstückes erfolgt. Im Ausführungsbeispiel erfolgt sowohl die Fräsbearbeitung, als auch das Wälzschälen mit der gleichen Aufspannung des Werkstückes in der Werkstückaufnahme 3. Weiterhin werden im Ausführungsbeispiel ein Fräswerkzeug und ein Wälzschälwerkzeug eingesetzt, welche in der Werkzeugaufnahme 2 der Verzahnmaschine aufgenommen und über die Bewegungsachsen des Bearbeitungskopfes 4 verfahren werden. Gemäß der im Folgenden dargestellten bevorzugten Ausführungsform sind das Fräswerkzeug und das Wälzschälwerkzeug auf dem gleichen Werkzeugdorn aufgespannt und daher gemeinsam in der Werkzeugaufnahme 2 aufgenommen. Alternativ wäre der Einsatz eines automatischen Werkzeugwechslers zum Wechseln der Werkzeuge zwischen den beiden Bearbeitungsschritten, oder der Einsatz zweier Werkzeugaufnahmen am Bearbeitungskopf 4 denkbar.

Bei dem anhand von Fig. 2 bis 5 dargestellten ersten Ausführungsbeispiel des erfindungsgemäßen Verfahrens werden in einem ersten Aspekt die Fräsbearbeitung und das Wälzschälen zur Bearbeitung des selben verzahnten Bereiches des Werkstückes 15 eingesetzt. Über die Schruppbearbeitung mittels des Fäswerkzeuges 13 wird hierbei die Verzahnung vorbearbeitet, während mittels des Wälzschälwerkzeugs 14 eine Feinbearbeitung vorgenommen wird, durch welche die Toleranzen der Oberflächengeometrie vermindert werden.

Das erste Ausführungsbeispiel der vorliegenden Erfindung kombiniert daher die Stärken der Fräsbearbeitung und des Wälzschälens, und gleicht die jeweiligen Schwächen dieser Verfahren aus. Die Fräsbearbeitung erlaubt hohe Zerspanleistungen bei relativ niedrigem Werkzeugverschleiß, hat jedoch bei großen Werkzeugvorschüben den Nachteil der geringen Qualität der Oberflächengeometrie. Durch das Wälzschälen kann eine hohe Qualität der Oberflächengeometrie erreicht werden, wobei der hohe Verschleiß des Werkzeugs beim Wälzschalens dadurch ausgeglichen wird, dass durch das Wälzschälen noch das im Rahmen der Fräsbearbeitung bzw. Schruppbearbeitung belassende Aufmaß entfernt werden muss, so dass die notwendige Zerspahnleistung und damit auch der Verschleiß des Wälzschälwerkzeugs entsprechend verringert wird.

Gemäß dem ersten Ausführungsbeispiel wird das Fräswerkzeug eingesetzt, um in einem ersten Bearbeitungsschritt eine Verzahnung zu erzeugen. Diese Verzahnung kann durch die Fräsbearbeitung aus dem ungehärteten Werkstückrohling erzeugt werden. In einem zweiten Schritt wird diese Verzahnung dann durch das Wälzschälen weiter bearbeitet, und hierdurch eine hohe Qualität der Oberflächengeometrie erreicht. Auch das Wälzschälen erfolgt bevorzugt am ungehärteten Werkstück.

Zwischen dem Fräsbearbeitungsschritt und dem Wälzschälschritt wird der Bearbeitungskopf 4 mit der Werkzeugaufnahme 2 um die A1-Achse verschwenkt, um die für die Fräsbearbeitung und die Wälzschälbearbeitung notwendigen Achskreuzwinkel zwischen der Rotationsachse B1 der Werkzeugaufnahme 2 und der Rotationsachse B2 der Werkstückaufnahme 3 bereitzustellen.

Bei dem anhand von Fig. 2 bis 5 dargestellten ersten Ausführungsbeispiel des erfindungsgemäßen Verfahrens wird in einem zweiten Aspekt eine Schneckenverzahnung auf dem Werkstück 15 erzeugt. Bspw. kann es sich bei dem Werkstück 15 dabei um ein Antriebselement eines Lenkungsantriebs eines Fahrzeuges handeln. Solche Antriebselemente kommen insbesondere bei steer-by-wire Lenkungen, bei welchen die Lenkbewegung des Lenkrades über einen Sensor erfasst und zur elektronischen Ansteuerung des Lenkantriebes eingesetzt wird, zum Einsatz.

Der Fräsbearbeitungsschritt bei dem ersten Ausführungsbeispiel des erfindungsgemäßen Verfahrens ist in Fig. 2 dargestellt. Als Fräswerkzeug 13 kommt im Ausführungsbeispiel ein Profilfräser zum Einsatz, welche an ihrem Außenumfang eine Mehrzahl von Schneidezähnen aufweist, jeweils eine identische axiale und radiale Position aufweisen und in Umfangsrichtung hintereinander angeordnet sind.

Über die A1-Achse wird die Werkzeugaufnahme 2, in welcher das Fräswerkzeug 13 eingespannt ist, in Abhängigkeit von dem gewünschten Steigungswinkel der Schneckengeometrie des Werkstücks 15 gegenüber der Rotationsachse B2 der Werkstückaufnahme 3 verschwenkt. Insbesondere entspricht der Achskreuzwinkel zwischen den Rotationsachsen B1 und B2 hierfür in etwa dem gewünschten Steigungswinkel, sodass die durch den Profilfräser definierte Ebene in etwa der Steigung des durch das Fräswerkzeug 13 erzeugten Gangs der Schneckengeometrie entspricht.

Zur Erzeugung der Schneckengeometrie rotiert das Fräswerkzeug 13 um die Achse B1. Die Rotationsbewegung des Werkzeugs 13 um die Rotationsachse B1 dient hierbei lediglich dem Materialabtrag, und muss daher nicht mit der Rotationsbewegung des Werkstückes 15 um die Achse B2 gekoppelt werden.

Nach dem entsprechenden Zustellen des Fräswerkzeugs 13 an das Werkstück 15 über die X1-Achse erfolgt eine Verfahrbewegung des Bearbeitungskopfes parallel zur Rotationsachse B2 der Werkstückaufnahme 3, insbesondere über die Z1-Achse. Hieran gekoppelt wird eine Drehbewegung des Werkstückes 15 um die B2-Achse der Werkstückaufnahme 3, sodass durch die Überlagerung der Bewegung parallel zur B2-Achse und der Rotationsbewegung um die B2-Achse ein Schneckengang erzeugt wird. Die Länge der Verfahrbewegung parallel zur Rotationsachse B2 entspricht daher der Breite der zu erzeugenden Schneckengeometrie. Weist die Schneckengeometrie mehrere Gänge auf, sind mehrere Bearbeitungsschritte mit einem in Z1-Richtung oder in Rotationsrichtung versetzten Ausgangspunkt notwendig.

Die Herstellung eines Gangs der Schneckengeometrie durch die Fräsbearbeitung kann in einem oder mehreren Arbeitshüben erfolgen. Werden mehrere Arbeitshübe eingesetzt, kann zwischen den einzelnen Arbeitshüben der Achsabstand verringert werden, insbesondere durch eine weitere Zustellung des Werkzeugs über die X1-Achse, um so den insgesamt notwendigen Materialabtrag auf mehrere Arbeitshübe zu verteilen.
Gemäß einem Aspekt der vorliegenden Erfindung wird die Schneckengeometrie des Werkstücks allein durch die Fräsbearbeitung hergestellt. In diesem Fall muss der Schwenkwinkelbereich der A1-Achse lediglich die für die Fräsbearbeitung notwendigen großen Achskreuzwinkel bereitstellen können, bspw. durch einen Schwenkwinkelbereich der A1-Achse, welcher mindestens einen Bereich von +/-15° um einen Achskreuzwinkel von 90° umfasst.

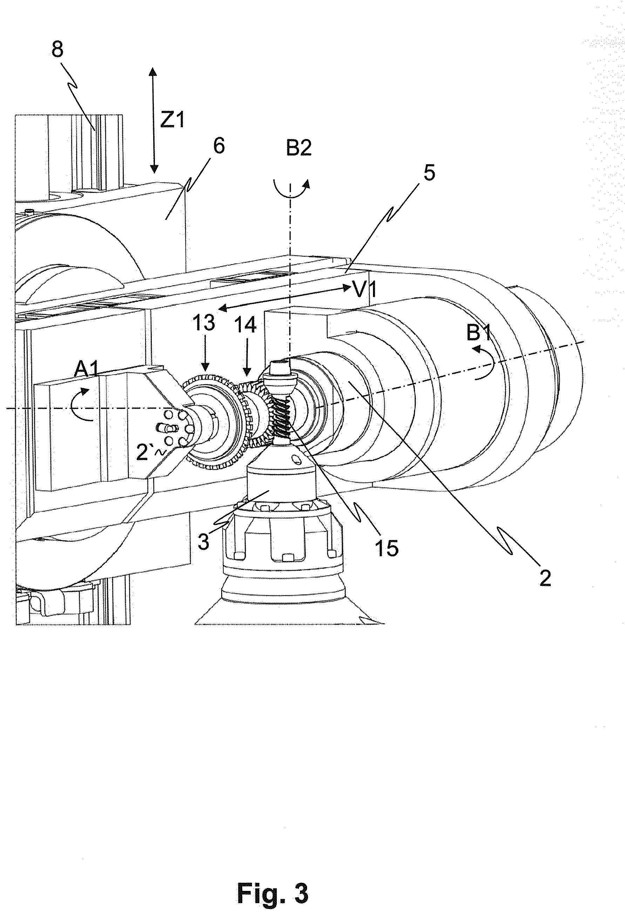

Bevorzugt wird gemäß dem ersten Ausführungsbeispiel jedoch in einem zweiten Bearbeitungsschritt die durch das Fräswerkzeug erzeugte Verzahnung, insbesondere die Schneckengeometrie, mittels des Wälzschälwerkzeugs 14 nachbearbeitet. Dieser zweite Bearbeitungsschritt ist in Fig. 3 bis 5 dargestellt.

Zur Durchführung des Wälzschälens erfolgt ein Verschwenken des Bearbeitungskopfes um die A1-Achse, um den für das Wälzschälen notwendigen Achskreuzwinkel zwischen den Rotationsachsen B1 und B2 zur Verfügung zu stellen. Zudem erfolgt eine Vershiftbewegung der Werkzeugaufnahme 2, insbesondere über die V1-Achse, um nunmehr das axial versetzt zum Fräswerkzeug 13 in der Werkzeugaufnahme 2 aufgenommene Wälzschälwerkzeug 14 in Eingriff mit der Schneckengeometrie zu bringen.

Die Wälzschälbearbeitung erfolgt durch eine mit der Rotation des Werkstückes 15 um die Rotationsachse B2 wälzgekoppelte Rotation des Wälzschälwerkzeuges um die Rotationsachse B1. Weiterhin wird der Bearbeitungskopf über die Z1-Achse parallel zur B2-Achse der Werkstückaufnahme 3 entlang der Breite der Schneckengeometrie verfahren.

Der Steigungswinkel der Schneckengeometrie beträgt bevorzugt zwischen 5° und 40°, weiterhin bevorzugt zwischen 10° und 20°. Die Änderung des Achskreuzwinkels zwischen den Achsen B1 und B2 und damit die Verschwenkbewegung der Schwenkachse A1 zwischen dem Fräsbearbeitungsschritt und dem Wälzschälschritt beträgt bevorzugt mehr als 50° und kann bspw. im Bereich zwischen 50° und 130° liegen, insbesondere im Bereich zwischen 60° und 120°.

Da eine Schneckengeometrie erzeugt wird, entspricht der Achskreuzwinkel beim Wälzschälen in etwa jenem Achskreuzwinkel, welcher sonst zum Fräsen von Stirnradverzahnungen notwendig ist. Daher kann eine zur Fräsbearbeitung ausgelegte Verzahnmaschine zum Wälzschälen einer Schneckengeometrie eingesetzt werden. Durch den größeren Schwenkwinkel, welcher gemäß einem Aspekt der vorliegenden Erfindung zur Verfügung steht, kann die Verzahnmaschine wie oben beschrieben auch dazu genutzt werden, um die Schneckenverzahnung zur fräsen.

Das erste Ausführungsbeispiel des erfindungsgemäßen Verfahrens, bei welchem die Fräsbearbeitung zur Erzeugung einer Vverzahnung eingesetzt wird, welche dann über das Wälzschälen feinbearbeitet wird, kann jedoch auch zur Erzeugung von Stirnradverzahnungen eingesetzt werden. Die Verfahrensschritte sind die gleichen, welche im Hinblick auf das bereits beschriebene Ausführungsbeispiel dargestellt wurden. Lediglich die Achskreuzwinkel unterscheiden sich von dem beschriebenen Ausführungsbeispiel, und sind um ca. 90° gegenüber dem beschriebenen Ausführungsbeispiel versetzt.

Anstelle eines Profilfräsers wird in einer möglichen alternativen Ausführungsform das erfindungsgemäße Verfahren gemäß dem ersten Ausführungsbeispiel unter Verwendung eines Wälzfräsers durchgeführt. In diesem Fall unterscheidet sich das Verfahren von dem dargestellten Verfahren nur insoweit, das auch bei diesem Fräser die Rotationsbewegung der Werkzeugachse B1 mit der Rotationsbewegung des Werkstückes B2 gekoppelt wird. Der Einsatz eines Wälzfräsers empfiehlt sich insbesondere bei der Herstellung von Stirnradverzahnungen.

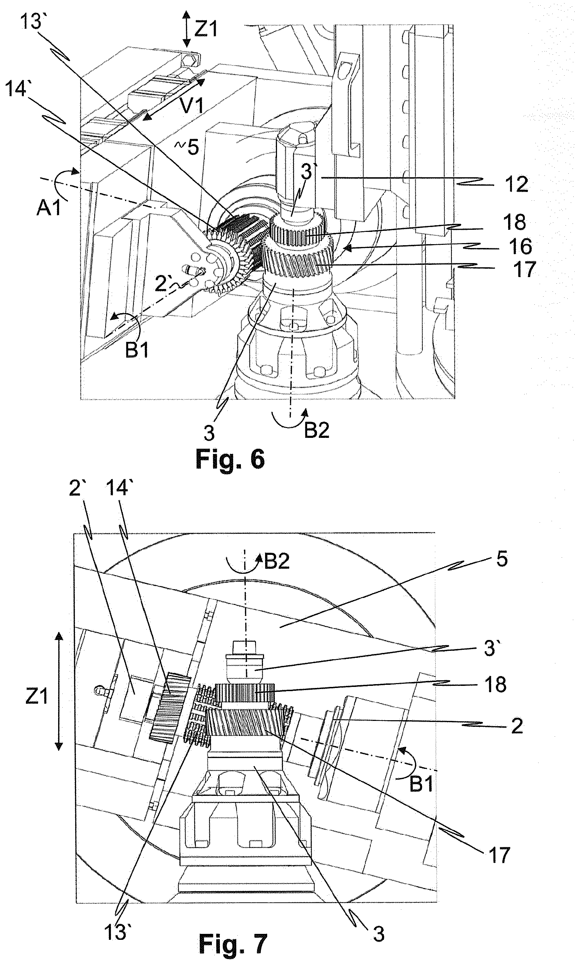

Ein zweites Ausführungsbeispiel der vorliegenden Erfindung wird nun anhand von Fig. 6 bis 10 näher beschrieben.

Die Fräsbearbeitung und die Wälzschälbearbeitung werden bei diesem Ausführungsbeispiel gemäß einem ersten Aspekt zur Herstellung unterschiedlicher Verzahnungen 17 und 18 des gleichen Werkstückes 16 eingesetzt. Dieser Aspekt des zweiten Ausführungsbeispiels der vorliegenden Erfindung macht sich zu Nutze, dass durch das Wälzschälen auch Verzahnungen erzeugbar sind, welche aufgrund von Störkonturen im Rahmen des Fräsens nicht herstellbar wären.

Insbesondere kann das zweite Ausführungsbeispiel dazu eingesetzt werden, um eine erste Verzahnung 17 mit einem größeren Durchmesser durch eine Fräsbearbeitung herzustellen, und eine zweite Verzahnung 18 mit einem kleineren Durchmesser oder mit einer für die Verzahnungsbearbeitung relevanten Störkontur durch eine Wälzschälbearbeitung. In diesem Fall wird der höhere Verschleiß des Wälzschälwerkzeugs in Kauf genommen, um überhaupt eine Herstellbarkeit des Werkstückes auf nur einer Maschine zu erreichen. Gemäß dem Stand der Technik musste dagegen, sollte die größere Verzahnung 17 durch eine Fräsbearbeitung hergestellt werden, das Werkstück in eine andere Maschine gewechselt werden, um die kleinere Verzahnung 18 durch einen Stoßprozess herzustellen.

Die vorliegende Erfindung macht durch die Kombination einer Fräsbearbeitung und einer Wälzschälbearbeitung dagegen die Herstellung eines solchen Werkstückes in eine Maschine und bevorzugt in einer Aufspannung möglich.

Die beiden Verzahnungen 17 und 18 auf dem Werkstück 16 sind im Ausführungsbeispiel axial versetzt an dem Werkstück 16 angeordnet. Sie können dabei so nahe nebeneinander platziert sein, dass die Herstellung der Verzahnung 18 mit kleinerem Durchmesser mittels einer Fräsbearbeitung nicht mehr möglich ist, da ein zur Herstellung der Verzahnung 18 eingesetzter Fräser die Verzahnung 17 mit größerem Durchmesser beschädigen würde.

Für das Wälzschälen kann dagegen eine ein- oder beidseitige axiale Störkontur deutlich näher an der Verzahnung angeordnet sein, wie bei einer gefrästen Verzahnung, da das Wälzschälverfahren deutlich weniger Überlaufweg benötigt um die Verzahnung herzustellen, sodass dieses zur Herstellung der Verzahnung 18 eingesetzt werden kann.

In einem zweiten Aspekt wird das zweite Ausführungsbeispiel des erfindungsgemäßen Verfahrens zur Herstellung von Stirnradverzahnungen 17 und 18 eingesetzt. Bei den Stirnradverzahnungen kann es sich dabei um Geradverzahnungen oder Schrägverzahnungen handeln.

In Fig. 6 bis 8 ist der Fräsbearbeitungsschritt des zweiten Ausführungsbeispiels des erfindungsgemäßen Verfahrens gezeigt.

Für die Fräsbearbeitung wird im Ausführungsbeispiel ein Wälzfräser 13' eingesetzt, um die erste Verzahnung 17 mit dem größeren Durchmesser herzustellen. Der Wälzfräser 13' rotiert um die Rotationsachse B1 der Werkzeugaufnahme 2 in Wälzkopplung mit der Rotation des Werkstücks 16 um die Rotationsachse B2 der Werkstückaufnahme 3. Weiterhin wird der Bearbeitungskopf 4 mit dem Wälzfräser 13 insbesondere über die Linearachse Z1 parallel zur Rotationsachse B2 des Werkstückes in Breitenrichtung an dem Werkstück 16 entlanggeführt.

Die Fräsbearbeitung kann wie bei dem ersten Ausführungsbeispiel beschrieben in einem oder mehreren Arbeitshüben erfolgen. Bevorzugt erfolgt die Bearbeitung dabei in mehreren Arbeitshüben, insbesondere durch eine Schruppbearbeitung und eine Schlichtbearbeitung.

Alternativ zum Einsatz eines Wälzfräsers kann auch ein Profilfräser eingesetzt werden. In diesem Fall muss jedoch jede Zahnlücke durch mindestens einen Arbeitshub hergestellt werden.

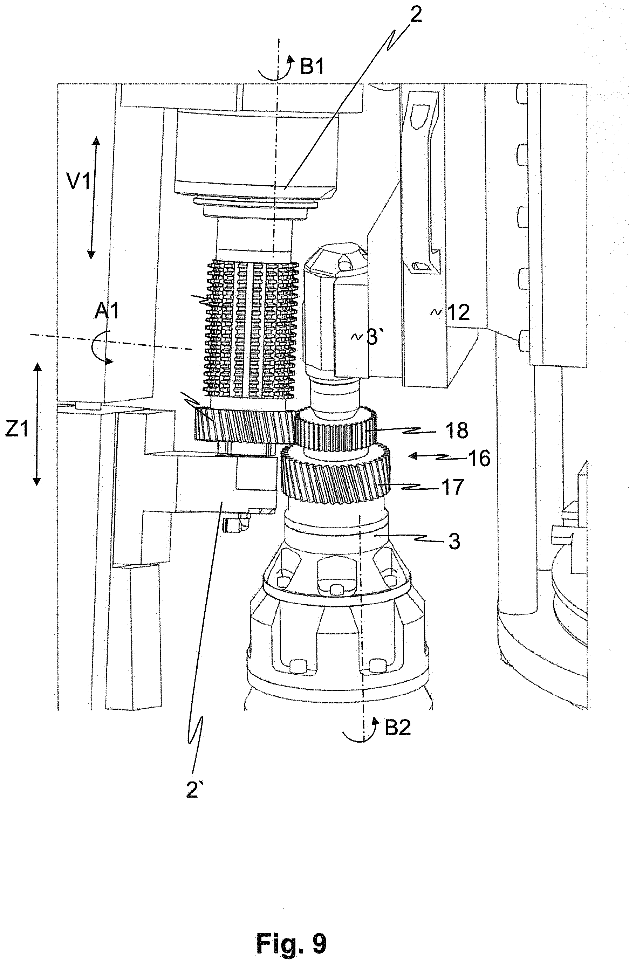

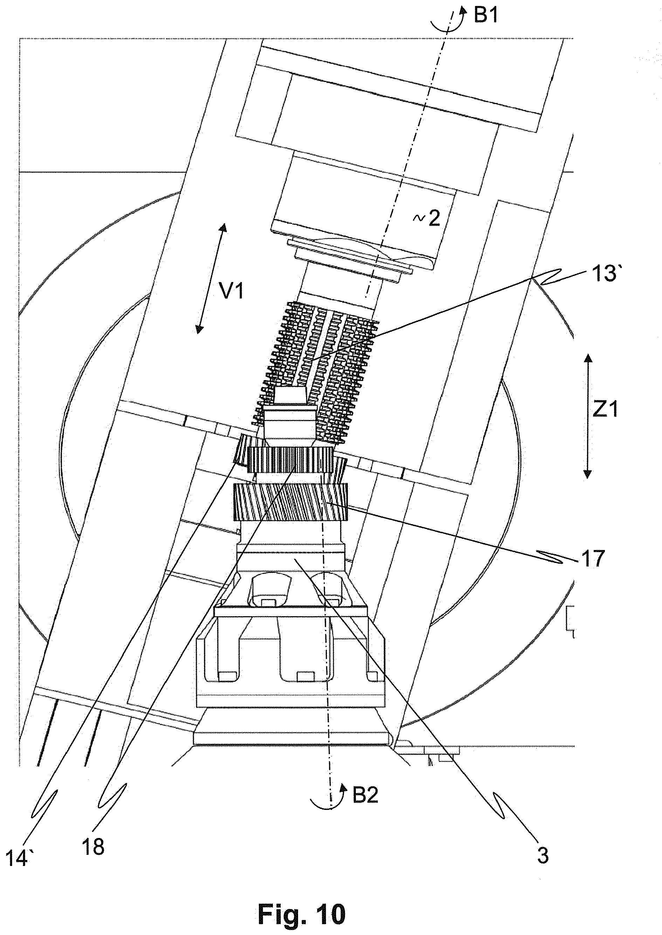

Der Achskreuzwinkel zwischen der Rotationsachse B1 und der Rotationsachse B2 entspricht bei der Wälzfräsbearbeitung im Wesentlichen dem Steigungswinkel der ersten Verzahnung 17 bzw. 90° minus dem Schrägungswinkel der ersten Verzahnung 17, wobei zusätzlich noch der Steigungswinkel des Werkzeuges zu berücksichtigen ist.
Die Wälzschälbearbeitung gemäß dem zweiten Ausführungsbeispiel der vorliegenden Erfindung ist in Fig. 9 und 10 dargestellt. Beim Wälzschälen erfolgt wie schon zum ersten Ausführungsbeispiel beschrieben eine Rotation des Wälzschälwerkzeugs 14' um die B1-Achse der Werkzeugaufnahme 2 in Wälzkopplung mit der Rotation des Werkstücks 16 um die Rotationsachse B2 der Werkstückaufnahme 3. Zudem erfolgt ein Vorschub des Bearbeitungskopfes über die Linearachse Z1 parallel zur Rotationsachse B2 der Werkstückaufnahme entlang der Breite der zweiten Verzahnung 18.

Obwohl es sich im Ausführungsbeispiel bei der zweiten Verzahnung 18 um eine Geradverzahnung handelt, wird das Wälzfräswerkzeug 14' mit einem von einer parallelen Ausrichtung abweichenden Achskreuzwinkel zwischen den Achsen B1 und B2 eingesetzt, und weist in diesem Ausführungsbeispiel eine Schrägverzahnung auf. Hierdurch wird die für das Wälzschälen notwendige Bewegung erzeugt. Auch bei der Herstellung von Schrägverzahnungen entspricht der Achskreuzwinkel bevorzugt nicht dem Schrägungswinkel der Verzahnung und/oder weist das Wälzschälwerkzeug 14' bevorzugt ein anderen Schrägungswinkel auf als die herzustellende Verzahnung, um die entsprechende Relativbewegung zum Wälzschälen zu erzeugen und/oder zu vergrößern.

Bei dem zweiten Ausführungsbeispiel des erfindungsgemäßen Verfahrens besteht keine bevorzugte Reihenfolge der beiden Bearbeitungsschritte, d.h. der Fräsbearbeitung und der Wälzschälbearbeitung, da diese zur Bearbeitung unterschiedlicher Verzahnungen eingesetzt werden.

Um von dem einen Bearbeitungsschritt zum anderen wechseln zu können, muss jedoch auch hier der Bearbeitungskopf um die Schwenkachse A1 verschwenkt werden. Die genaue Größe der notwendigen Schwenkbewegung hängt unter anderem von den jeweiligen Schrägungswinkeln der Verzahnungen 17 und 18, sowie der Werkzeugauslegung ab.

Der notwendige Schwenkwinkelbereich ist üblicherweise größer als 50° und kann beispielsweise in einem Bereich von 50° bis 130° liegen, bevorzugt im Bereich von 60° bis 120°.

Auch beim zweiten Ausführungsbeispiel des erfindungsgemäßen Verfahrens wird bei einem Wechsel zwischen den beiden Bearbeitungsschritten neben der Schwenkbewegung um die A1-Achse eine Shiftbewegung vorgenommen, um das jeweils andere Werkzeug mit der jeweils zu bearbeiteten Verzahnung in Eingriff zu bringen.

Wie in den Figuren zu den jeweiligen Verfahren gezeigt, weisen die Werkstückaufnahmen und die Werkzeugaufnahme bevorzugt jeweils Gegenlager auf, sodass Werkstück und Werkzeug zweiseitig eingespannt sind. Dies ist bei den im Rahmen des Fräsens auftretenden hohen Zerspankräften von Bedeutung.

Die Gegenlager sind bevorzugt möglichst schmal ausgeführt, um eine entsprechende Bewegungsfreiheit in axialer Richtung für den Wälzschälprozess zur Verfügung zu stellen.

## Patentansprüche

1. Verfahren zur Verzahnbearbeitung eines Werkstücks, bei welchem eine Fräsbearbeitung des Werkstücks erfolgt, um eine Verzahnungsgeometrie des Werkstücks zu erzeugen,
**dadurch gekennzeichnet,**
**dass** das Werkstück zusätzlich zu der Fräsbearbeitung durch Wälzschälen verzahnbearbeitet wird.

2. Verfahren nach Anspruch 1, wobei die Fräsbearbeitung und das Wälzschälen durch die gleiche Verzahnmaschine erfolgen, wobei bevorzugt die Fräsbearbeitung und das Wälzschälen mit der gleichen Aufspannung des Werkstücks in einer Werkstückaufnahme der Verzahnmaschine erfolgen und/oder wobei bevorzugt ein zur Fräsbearbeitung eingesetztes Fräswerkzeug und ein zum Wälzschälen eingesetztes Wälzschälwerkzeug zumindest bei der Durchführung des jeweiligen Bearbeitungsschritts in der gleichen Werkzeugaufnahme der Verzahnmaschine aufgenommen sind und/oder durch die Achsen des gleichen Bearbeitungskopfes der Verzahnmaschine verfahren werden.

3. Verfahren nach Anspruch 2, wobei das Fräswerkzeug und das Wälzschälwerkzeug auf dem gleichen Werkzeugdorn aufgespannt sind und/oder wobei die Verzahnmaschine zwei bevorzugt an einem Bearbeitungskopf angeordnete Werkzeugaufnahmen und/oder einen automatischen Werkzeugwechsler zum Wechseln zwischen dem Fräswerkzeug und dem Wälzschälwerkzeug aufweist.

4. Verfahren nach einem der vorangegangenen Ansprüche, wobei bei der Fräsbearbeitung und/oder beim Wälzschälen eine Vorschubbewegung des jeweiligen Werkzeuges parallel zu einer Achse der Werkstückaufnahme erfolgt, insbesondere über einen parallel zur Achse der Werkstückaufnahme verfahrbaren Schlitten des Bearbeitungskopfes der Verzahnmaschine, wobei eine Rotationsbewegung der Werkstückaufnahme an die Vorschubbewegung und/oder eine Rotationsbewegung der Werkzeugaufnahme gekoppelt ist.

5. Verfahren nach einem der vorangegangenen Ansprüche, wobei der Bearbeitungskopf der Verzahnmaschine und insbesondere die Werkzeugaufnahme, in welcher das Werkzeug zur Fräsbearbeitung und das Werkzeug zum Wälzschälen aufgenommen sind, zwischen den beiden Bearbeitungsschritten relativ zur Achse der Werkstückaufnahme verschwenkt wird, bevorzugt um eine senkrecht zur Achse der Werkstückaufnahme und/oder Werkzeugaufnahme verlaufende Verschwenkachse des Bearbeitungskopfes,
und/oder wobei die Fräsbearbeitung mit einem ersten Achskreuzwinkel zwischen Werkzeug und Werkstück erfolgt und die Wälzschälbearbeitung mit einem zweiten Achskreuzwinkel zwischen Werkzeug und Werkstück erfolgt, wobei die Differenz zwischen dem ersten und dem zweiten Achskreuzwinkel mehr als 45° beträgt, bevorzugt mehr als 70° und/oder wobei die Differenz zwischen dem ersten und dem zweiten Achskreuzwinkel weniger als 135° beträgt, bevorzugt weniger als 110°, weiter bevorzugt weniger als 100°,
und wobei die Werkzeugaufnahme, in welcher das Werkzeug zur Fräsbearbeitung und das Werkzeug zum Wälzschälen aufgenommen sind, zwischen den beiden Bearbeitungsschritten relativ zum Werkstück vershiftet wird, bevorzugt über einen parallel zur Drehachse der Werkzeugaufnahme verfahrbaren Schlitten eines die Werkstückaufnahme tragenden Bearbeitungskopfes und/oder über zwei eine Ebene senkrecht zur Schwenkachse aufspannende Bewegungsachsen eines die Werkstückaufnahme tragenden Bearbeitungskopfes.

6. Verfahren nach einem der vorangegangenen Ansprüche, wobei die Fräsbearbeitung am ungehärteten Werkstück erfolgt und/oder zumindest zur Schruppbearbeitung einer Verzahnung aus einem Rohling des Werkstücks eingesetzt wird, und/oder wobei die Wälzschälbearbeitung am ungehärteten Werkstück erfolgt und/oder zumindest zur Schlichtbearbeitung einer Verzahnung eingesetzt wird.

7. Verfahren nach einem der vorangegangenen Ansprüche, wobei die Fräsbearbeitung und die Wälzschälbearbeitung zur Herstellung der gleichen Verzahnung eingesetzt werden, wobei bevorzugt zunächst eine Schruppbearbeitung zur Herstellung einer Verzahnung und darauffolgend eine Wälzschälbearbeitung am verzahnten Werkstück zur Schlichtbearbeitung einer Verzahnung durchgeführt werden.

8. Verfahren nach einem der vorangegangenen Ansprüche, insbesondere nach Anspruch 7, wobei es sich bei der Verzahnung um eine Schneckenverzahnung handelt, insbesondere zur Herstellung eines Antriebselementes mit Schneckenverzahnung eines Lenkantriebs eines Fahrzeugs.

9. Verfahren nach Anspruch 8, wobei die Fräsbearbeitung durch einen scheibenförmigen Profilfräser erfolgt, welcher bevorzugt unabhängig von der Drehbewegung der Werkstückaufnahme rotiert, wobei bevorzugt der Profilfräser bei der Fräsbearbeitung parallel zur Achse der Werkstückaufnahme verfahren wird, während das Werkstück so um seine Achse gedreht wird, dass der Profilfräser einen Schneckengang erzeugt, und/oder wobei die Fräsbearbeitung mit einem von dem Steigungswinkel der Schneckenverzahnung abhängigen Achskreuzwinkel erfolgt, wobei der Achskreuzwinkel bevorzugt in etwa dem Steigungswinkel entspricht,
und/oder wobei das Wälzschälen durch eine Wälzkopplung zwischen dem Wälzschälwerkzeug und dem Werkstück erfolgt und das Wälzschälwerkzeug beim Wälzschälen parallel zur Achse der Werkstückaufnahme verfahren wird, wobei das Wälzschälwerkzeug bevorzugt einen Treppenschliff aufweist und/oder das Wälzschälen mit einem von 90° abweichendem Achskreuzwinkel erfolgt, wobei der Winkel des Treppenschliffs und/oder die Abweichung des Achskreuzwinkels von 90° bevorzugt in etwa dem Steigungswinkel entspricht,
und/oder wobei die Fräsbearbeitung mit einem Achskreuzwinkel zwischen dem Fräswerkzeug und dem Werkstück im Bereich von +- 5° und +- 40°, insbesondere im Bereich von +- 10° und +- 20° durchgeführt wird und die Wälzschälbearbeitung mit einem Achskreuzwinkel zwischen dem Fräswerkzeug und dem Werkstück im Bereich von 90° +- 40° durchgeführt wird, insbesondere mit einem Achskreuzwinkel zwischen dem Fräswerkzeug und dem Werkstück im Bereich von 90° +- 20°.

10. Verfahren nach einem der vorangegangenen Ansprüche, wobei die Fräsbearbeitung und die Wälzschälbearbeitung zur Herstellung zweier unterschiedlicher Verzahnungen des Werkstücks eingesetzt werden, wobei bevorzugt eine Fräsbearbeitung zur Herstellung einer ersten Verzahnung und eine Wälzschälbearbeitung zur Herstellung einer zweiten Verzahnung durchgeführt werden, wobei die erste Verzahnung bevorzugt einen größeren Durchmesser aufweist als die zweite Verzahnung und/oder eine Störkontur für die zweite Verzahnung besteht.

11. Verfahren nach einem der vorangegangenen Ansprüche, insbesondere nach Anspruch 10, wobei es sich bei der Verzahnung oder den Verzahnungen um eine Stirnradverzahnung handelt, insbesondere zur Herstellung eines Werkstücks mit Mehrfach-Verzahnung, insbesondere einer Welle mit mindestens zwei nebeneinander angeordneten Stirnradverzahnungen, insbesondere mit unterschiedlichem Durchmesser und/oder mit einer Störkontur nahe an einer Stirnseite einer der Verzahnungen.

12. Verfahren nach einem der vorangegangenen Ansprüche, insbesondere nach Anspruch 11, wobei die Fräsbearbeitung durch einen Wälzfräser erfolgt, dessen Rotationsbewegung an die Rotationsbewegung der Werkstückaufnahme gekoppelt ist, wobei bevorzugt der Wälzfräser bei der Fräsbearbeitung parallel zur Achse der Werkstückaufnahme verfahren wird,
und/oder wobei das Wälzschälen durch eine Wälzkopplung zwischen dem Wälzschälwerkzeug und dem Werkstück erfolgt und das Wälzschälwerkzeug beim Wälzschälen parallel zur Achse der Werkstückaufnahme verfahren wird, und/oder wobei die Fräsbearbeitung mit einem Achskreuzwinkel zwischen dem Fräswerkzeug und dem Werkstück im Bereich von 90° +- 45°, insbesondere im Bereich von 90° +- 35° durchgeführt wird und die Wälzschälbearbeitung mit einem Achskreuzwinkel zwischen dem Fräswerkzeug und dem Werkstück im Bereich von +- 45°, insbesondere im Bereich von +- 35° durchgeführt wird.

13. Verzahnmaschine zur Durchführung eines Verfahrens nach einem der vorangegangenen Ansprüche, mit einer Werkstückaufnahme und einer Werkzeugaufnahme, welche über Bewegungsachsen der Verzahnmaschine gegenüber der Werkstückaufnahme verfahrbar ist, wobei die Werkzeugaufnahme bevorzugt an einem Bearbeitungskopf angeordnet ist, welcher über Bewegungsachsen der Verzahnmaschine verfahrbar ist, wobei die Verzahnmaschine bevorzugt eine Steuerung zur Ansteuerung der Bewegungsachsen der Verzahnmaschine aufweist, welche eine Funktion zur Durchführung eines Verfahrens nach einem der vorangegangenen Ansprüche aufweist, insbesondere eine Funktion zur automatisierten Durchführung eines Verfahrens nach einem der vorangegangenen Ansprüche zur Herstellung einer Vielzahl verzahnter Werkstücke.

14. Verzahnmaschine insbesondere nach Anspruch 13, mit einer Werkstückaufnahme und einer Werkzeugaufnahme, welche über Bewegungsachsen der Verzahnmaschine gegenüber der Werkstückaufnahme verfahrbar ist, wobei die Werkzeugaufnahme an einem Bearbeitungskopf angeordnet ist, welcher über Bewegungsachsen der Verzahnmaschine verfahrbar ist,
**dadurch gekennzeichnet,**
**dass** der Bearbeitungskopf der Verzahnmaschine mit der Werkzeugaufnahme eine Schwenkachse aufweist, welche bevorzugt senkrecht auf der Achse der Werkstückaufnahme steht, wobei die Schwenkachse einen Schwenkwinkel von mehr als 90°, bevorzugt von mehr als 110°, weiter bevorzugt von mehr als 130° aufweist, insbesondere einen Schwenkwinkelbereich, welcher einen Bereich von - 20° bis + 90° relativ zur Achse der Werkstückaufnahme umfasst, insbesondere einen Bereich von - 30° bis + 100° relativ zur Achse der Werkstückaufnahme.

15. Software zur Ansteuerung einer Verzahnmaschine, insbesondere zur Ansteuerung einer Verzahnmaschine nach einem der Ansprüche 13 oder 14, mit einer Funktion zur Durchführung eines Verfahrens nach einem der vorangegangenen Ansprüche, insbesondere einer Funktion zur automatisierten Durchführung eines Verfahrens nach einem der vorangegangenen Ansprüche zur Herstellung einer Vielzahl verzahnter Werkstücke.
